# EUROPÄISCHE PATENTSCHRIFT

(11) **EP 3 828 032 B1**
(45) Veröffentlichungstag und Bekanntmachung des Hinweises auf die Patenterteilung: **23.08.2023**
(21) Anmeldenummer: 20182592.4
(22) Anmeldetag: 19.06.2020
(51) Int. Cl.: B60P 3/36, B62D 29/04, B62D 29/00

(54) **VOLLINTEGRIERTES WOHNMOBIL**
FULLY INTEGRATED MOBILE HOME
CAMPING-CAR ENTIÈREMENT INTÉGRÉ

(30) Priorität: 19.06.2019 DE 102019116710
(43) Veröffentlichungstag der Anmeldung: 02.06.2021
(73) Patentinhaber: Erwin Hymer Group SE, 88339 Bad Waldsee (DE)
(72) Erfinder: Kaiser, Ria, 21077 Hamburg (DE); Kasten, Ole, 21680 Stade (DE); Weltjen, Martin, 21726 Oldendorf (DE); Wulf, Mathis, 21680 Stade (DE)
(74) Vertreter: Waller, Stefan

(56) Entgegenhaltungen:
- WO-A1-2020/212455
- CN-U- 206 561 801
- DE-U1-202005 011 102
- DE-U1-202010 015 400

## Beschreibung

Die Erfindung betrifft ein Wohnmobil nach dem Oberbegriff des Patentanspruchs 1.

Wohnmobile wie zum Beispiel WO 2020/212455 und CN 206 561 801 werden in der einen bekannten Variante aus einem Triebkopf, der der Motor und die Fahrerkabine eines handelsüblichen Kleinlasters bzw. Transporters umfasst, aufgebaut. Dies geschieht, indem entweder ein Fahrgestell mit dem Rahmen des Herstellers ohne Aufbau hinter der Fahrerkabine verwendet wird, zumeist jedoch ein speziell hierfür gefertigter Rahmen an den Triebkopf angesetzt wird. Auf diese Einheit wird dann der Wohnbereich aufgesetzt. Hierzu werden Wandflächen, beispielsweise Seitenwände oder ein Dach, aus Leichtbaumaterialien, beispielsweise Sandwichplattenkonstruktionen mit einem Isoliermaterial zwischen zwei faserverstärkten Kunststoffschichten, eingesetzt. An einem Laufboden als weitere Fläche bzw. Bodenfläche des Aufbaus, im Regelfall ebenfalls aus einem möglichst leicht gehaltenen Mehrschichtaufbau, werden die Seitenwände angesetzt und mit dem Dach verbunden.

Bei sogenannten vollintegrierten Wohnmobilen wird auch die Karosserie der Fahrerkabine durch einen eigenen Aufbau des Wohnmobilherstellers ersetzt. Beispielsweise werden in diesem Fall die Seitenwände ganz nach vorne verlängert und an die Front eine Frontschürze oder Bugmaske angesetzt. Die Bugmaske dient neben dem vorderen Abschluss des Fahrzeugs zur Aufnahme einer Windschutzscheibe, die bei dieser Art von Fahrzeugen im Regelfall erheblich größer ist als die originale Windschutzscheibe des entsprechenden Transporters. Weiterhin erfolgt durch die Bugmaske eine Versteifung der gesamten Front und ist die Bugmaske mit der Windschutzscheibe ein Designelement.

Nachteilig an diesem Stand der Technik ist, dass die Bugmaske zumeist überwiegend als einschichtiges Bauelemente aufgebaut ist und keine Kräfte in Querrichtung oder senkrechte Kräfte bzw. Kräfte in Hochrichtung in größerem Umfang aufnehmen kann. Daneben ist die Qualität der Bugmasken unterschiedlich, zum Beispiel in der Produktion, wenn diese durch Mitarbeiter gefertigt werden und zum Teil unterschiedliche Materialstärken bzw. Qualitäten der Verarbeitung einer Faserverstärkung aufweisen. Deswegen ist eine definierte und gleichbleibende Sicherheitsstruktur in Bezug auf die Aufnahme von Kräften bei einem Crash oder Überschlag nur schwer umzusetzen.

Weiterhin sind zusätzliche Bauteile für diverse Funktionen notwendig. Dies sind etwa Schienen für Rollos zur Verdunkelung und als Sichtschutz vor der Windschutzscheibe sowie den Seitenfenstern während des Campens. Weiterhin ist eine Führung für ein Hubbett oftmals gewünscht und für dieses eine Kinematik erforderlich.

Für die Aufnahme und Befestigung der Bugmaske sind Brackets bzw. Halteelemente erforderlich Das Design einer Bugmaske erlaubt nur eine gewisse Aussteifung die für bestimmte Testszenarien oder Szenarien, wie beispielsweise Crashereignisse, oftmals unzureichend sind.

Es ist daher Aufgabe der vorliegenden Erfindung, ein Wohnmobil mit einer Bugmaske als vollintegriertes Wohnmobil zur Verfügung zu stellen, bei dem die zuvor genannten Nachteile vermieden werden, und das im Bereich der Bugmaske eine erhöhte Stabilität aufweist.

Diese Aufgabe wird durch ein Wohnmobil mit den Merkmalen des unabhängigen Patentanspruchs 1 gelöst. Vorteilhafte Ausgestaltungen der Erfindung werden in den Unteransprüchen angegeben.

Vorteilhaft ist bei einem Wohnmobil mit einer die Windschutzscheibe und vordere Karosserieteile des Herstellers des zugrunde liegenden Fahrzeugs ersetzenden Bugmaske, wobei die Bugmaske über Halteelemente an einer tragenden Struktur für den Antriebsmotor und die Vorderachse befestigt ist, vorgesehen, dass hinter, an der Bugmaske angeordnet und/oder in die Bugmaske integriert eine Rahmenstruktur vorgesehen ist.

Die Hersteller von vollintegrierten Wohnmobilen verwenden zu deren Aufbau im Regelfall sogenannte Windläufe. Dies sind Einheiten aus einer tragenden Struktur des Antriebsmotors mit den wesentlichen Funktionselementen für die Bedienung des Fahrzeugs, jedoch ohne die Fahrerkabine. Die unteren Bereiche der A-Säule und eventuell B-Säule sind oft noch vorhanden, jedoch keine weitergehende Karosserie. Die Bugmaske weist eine erheblich größere Breite auf und muss wegen der Gestaltung moderner Transporter mit den Anforderungen an Fußgängerschutz und Crasheigenschaften wie auch aus Designgründen relativ weit vor der Sitzposition eines Fahrers angeordnet werden. Durch die Rahmenstruktur kann die Festigkeit im Hinblick auf Sicherheitsanforderungen, insbesondere bei einem Aufprallunfall sowie Überschlagereignissen, erheblich verbessert werden. Es wird auch die Torsionsfestigkeit des gesamten Fahrzeuges verbessert und dadurch der Fahrkomfort wie auch der Geräuscheindruck.

Für die Rahmenstruktur sind mit verschiedenen Fertigungsverfahren hergestellte Elemente denkbar, wie Aluminium-Strangpressprofile und Faserverbundkunststoffe z.B. als Pultrusionsprofile.

In einer weiteren Ausgestaltung ist die Rahmenstruktur an der Bugmaske angeformt und bestehen die Bugmaske sowie die Rahmenstruktur aus faserverstärkten Kunststoffen bestehen.

Die Rahmenstruktur kann dabei beispielsweise auch vollständig integriert werden, indem eine Rahmenstruktur aus Metall, aber auch aus dem gleichen oder einem anderen faserverstärkten Kunststoff, etwa kohlefaserverstärkten Kunststoff, einlaminiert und in die Bugmaske integriert wird. Es ist auch denkbar, dass eine Rahmenstruktur als zweites Element mit der Bugmaske verklebt und/oder zusammenlaminiert wird.

Die Rahmenstruktur kann in Teilen oder vollständig als gegenüber der Bugmaske eigenständige Struktur ausgebildet sein.

Vorteilhaft können von der tragenden Struktur des Antriebsmotors nach oben seitlich außen sich erstreckende Anbindungselemente bis zu der Rahmenstruktur der Bugmaske vorgesehen sein.

Die Anbindungselemente entsprechen in ihrer Funktion Tragelementen. Die Anbindung der eine A-Säule bildenden Rahmenstruktur kann beispielsweise in der beschriebenen besonderen Ausführung erfolgen, sodass bei einem Unfall die Kraft sicher in die Fahrzeugstruktur eingeleitet wird. Es können auf die Bugmaske einwirkende Kräfte in die tragende Struktur des Windlaufs eingeleitet werden. Insbesondere ist es denkbar, diese Anbindungselemente mit gezielten Deformations-eigenschaften zur Energieaufnahme auszulegen.

In einer Weiterbildung des Wohnmobils können die Anbindungselemente durch Deformation bei einem Aufprall Energie aufnehmen.

In einer Weiterbildung weist die Rahmenstruktur seitlich der Windschutzscheibe der Bugmaske entsprechend einer A Säule wirkende Seitenrahmenelemente auf.

Die Rahmenstruktur kann entsprechend einer B Säule wirkende Seitenrahmenelemente aufweisen.

Die Rahmenstruktur bildet dadurch eine vollwertige A-Säule und/oder B-Säule. Es können auch bei einem vollintegrierten Wohnmobil die wesentlichen tragenden Elemente einer Sicherheitszelle ausgebildet werden.

Die Seitenrahmen können bis zu einem oberen Ende der Bugmaske hochgezogen sein und sich auf Rahmenelemente des dahinter angeordneten Aufbaus abstützen bzw. mit diesem verbunden sein.

Die Rahmenstruktur als Sicherheitsstruktur bindet dadurch an bestehende Längsprofile im Aufbau an. Eine Krafteinleitung von der Rahmenstruktur in den Aufbau in Längsrichtung dient der passiven Sicherheit. Des Weiteren bildet die Rahmenstruktur eine gleichbleibende Qualität der Sicherheitsstruktur, die eine Überrollfähigkeit garantiert.

Vorteilhaft weist die Rahmenstruktur oberhalb der Windschutzscheibe ein oder mehrere Querrahmenelemente auf.

In einer vorteilhaften Ausgestaltung weist die Rahmenstruktur Führungselemente für Verdunkelungsrollos und/oder ein Hubbett auf.

Die Rahmenstruktur kann dabei in entsprechenden Bereichen aus Profilen besteht, die in ihrem Querschnitt Führungen und Aufnahmen für die Windschutzscheibe, ein Verdunklungsrollo und/oder Elemente einer Hubbettführung aufweisen. Es ist auch möglich, in die Rahmenstruktur Kabelkanäle oder Kabelführungen zu integrieren.

Vorteilhaft sind als Führungselemente für ein Hubbett Lenker an der Rahmenstruktur drehbar gelagert.

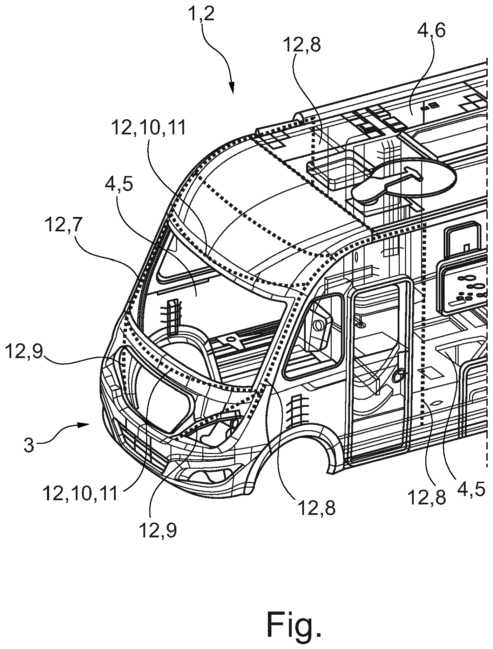

Ein vorteilhaft ausgebildetes Ausführungsbeispiel wird in der Figur dargestellt. Diese zeigt schematisch in einer Perspektivansicht den vorderen Teil einer Karosserie 1 eines vollintegrierten Wohnmobils 2. Im Frontbereich des Wohnmobils 2 ist eine Bugmaske 3 angeordnet. Zusammen mit Wandelementen 4, die Seitenwände 5 und eine Dachfläche 6 darstellen, wird die Karosserie 1 gebildet, die die Originalkarosserie des Fahrzeuges ersetzt und auf einem Windlauf aufgebaut ist.

Durch die gepunktete Linie ist eine Rahmenstruktur 12 angedeutet, die hinter der Bugmaske angeordnet ist und eine A-Säule 7 sowie eine B-Säule 8 ausbildet. Es ergibt sich dadurch eine Sicherheitszelle, die im Falle eines Aufpralls Kräfte aufnehmen kann. Ebenso wird eine Sicherheitszelle gebildet für den Fall eines Überschlags.

Durch Anbindungselemente 9 folgt eine Abstützung der Rahmenstruktur 12 auf dem hier nicht dargestellten Windlauf bzw. Fahrgestellelementen. Durch Querrahmenelemente 10 als Querversteifungen wird zugleich eine Aufnahme 11 für eine nicht dargestellte Windschutzscheibe gebildet.

## Patentansprüche

1. Wohnmobil mit einer die Windschutzscheibe und vordere Karosserieteile des Herstellers des zugrunde liegenden Fahrzeugs ersetzenden Bugmaske (3), wobei die Bugmaske (3) über Halteelemente an einer tragenden Struktur für den Antriebsmotor und die Vorderachse befestigt ist,
**dadurch gekennzeichnet,**
**dass** hinter und an der Bugmaske (3) angeordnet und/oder in die Bugmaske (3) integriert eine Rahmenstruktur (12) vorgesehen ist.

2. Wohnmobil nach Anspruch 1,
**dadurch gekennzeichnet,**
**dass** die Rahmenstruktur (12) an der Bugmaske (3) angeformt ist und die Bugmaske (3) sowie die Rahmenstruktur (12) aus faserverstärkten Kunststoffen bestehen.

3. Wohnmobil nach Anspruch 1 oder 2,
**dadurch gekennzeichnet,**
**dass** die Rahmenstruktur (12) in Teilen oder vollständig als gegenüber der Bugmaske (3) eigenständige Struktur ausgebildet ist.

4. Wohnmobil nach einem der vorhergehenden Ansprüche,
**dadurch gekennzeichnet,**
**dass** von der tragenden Struktur des Antriebsmotors nach oben seitlich außen sich erstreckende Anbindungselemente (9) bis zu der Rahmenstruktur (12) der Bugmaske (3) vorgesehen sind.

5. Wohnmobil nach Anspruch4,
**dadurch gekennzeichnet,**
**dass** die Anbindungselemente (9) durch Deformation bei einem Aufprall Energie aufnehmen können.

6. Wohnmobil nach einem der vorhergehenden Ansprüche,
**dadurch gekennzeichnet,**
**dass** die Rahmenstruktur (12) seitlich der Windschutzscheibe der Bugmaske (3) entsprechend einer A Säule (7) wirkende Seitenrahmenelemente aufweist.

7. Wohnmobil nach einem der vorhergehenden Ansprüche,
**dadurch gekennzeichnet,**
**dass** die Rahmenstruktur (12) entsprechend einer B Säule wirkende Seitenrahmenelemente aufweist.

8. Wohnmobil nach Anspruch 5,
**dadurch gekennzeichnet,**
**dass** die Seitenrahmen der bis zu einem oberen Ende der Bugmaske hochgezogen sind und sich auf Rahmenelemente des dahinter angeordneten Aufbaus abstützen bzw. mit diesen verbunden sind.

9. Wohnmobil nach einem der vorhergehenden Ansprüche,
**dadurch gekennzeichnet,**
**dass** die Rahmenstruktur (12) oberhalb der Windschutzscheibe ein oder mehrere Querrahmenelemente (10) aufweist.

10. Wohnmobil nach einem der vorhergehenden Ansprüche,
**dadurch gekennzeichnet,**
**dass** die Rahmenstruktur (12) Führungselemente für Verdunkelungsrollos und/oder ein Hubbett und/oder Kabelkanäle und/oder Kabelführungen aufweist.

11. Wohnmobil nach Anspruch 10,
**dadurch gekennzeichnet,**
**dass** als Führungselemente für ein Hubbett Lenker an der Rahmenstruktur (12) drehbar gelagert sind.

## Claims

1. Mobile home having a front mask (3) which replaces the windscreen and front body parts of the manufacturer of the underlying vehicle, wherein the front mask (3) by way of holding elements is fastened to a support structure for the drive motor and the front axle,
**characterized in that**
a frame structure (12) is provided so as to be disposed behind and on the front mask (3) and/or integrated in the front mask (3).

2. Mobile home according to Claim 1,
**characterized in that**
the frame structure (12) is integrally moulded to the front mask (3), and the front mask (3) and the frame structure (12) are composed of fibre-reinforced plastics materials.

3. Mobile home according to Claim 1 or 2, **characterized in that**
the frame structure (12) in parts or entirely is configured as a self-contained structure in relation to the front mask (3).

4. Mobile home according to one of the preceding claims,
**characterized in that**
attachment elements (9) which from the support structure of the drive motor extend upwards and laterally outwards up to the frame structure (12) of the front mask (3) are provided.

5. Mobile home according to Claim 4,
**characterized in that**
the attachment elements (9) in the event of an impact can absorb energy by deformation.

6. Mobile home according to one of the preceding claims,
**characterized in that**
the frame structure (12) laterally of the windscreen of the front mask (3) has side frame elements which function in a manner corresponding to an A-pillar (7) .

7. Mobile home according to one of the preceding claims,
**characterized in that**
the frame structure (12) has side frame elements which function in a manner corresponding to a B-pillar.

8. Mobile home according to Claim 5,
**characterized in that**
the side frames are raised up to an upper end of the front mask, and are supported on frame elements of the superstructure disposed behind said front mask, or are connected to said frame elements.

9. Mobile home according to one of the preceding claims,
**characterized in that**
the frame structure (12) above the windscreen has one or a plurality of cross frame elements (10).

10. Mobile home according to one of the preceding claims,
**characterized in that**
the frame structure (12) has guide elements for blackout roller blinds and/or a lift bed and/or cable ducts and/or cable conduits.

11. Mobile home according to Claim 10,
**characterized in that**
control arms as guide elements for a lift bed are rotatably mounted on the frame structure (12).

## Revendications

1. Camping-car avec un masque avant (3) remplaçant le pare-brise et les parties de carrosserie avant du constructeur du véhicule sous-jacent, le masque avant (3) étant fixé par des éléments de retenue à une structure porteuse pour le moteur d'entraînement et l'essieu avant,
**caractérisé en ce que**
une structure de cadre (12) est prévue agencée derrière et sur le masque avant (3) et/ou intégrée dans le masque avant (3).

2. Camping-car selon la revendication 1,
**caractérisé en ce que**
la structure de cadre (12) est formée sur le masque avant (3) et le masque avant (3) ainsi que la structure de cadre (12) sont constitués de matières plastiques renforcées par des fibres.

3. Camping-car selon la revendication 1 ou 2,
**caractérisé en ce que**
la structure du cadre (12) est en partie ou en totalité réalisée sous forme de structure autonome par rapport au masque avant (3).

4. Camping-car selon l'une quelconque des revendications précédentes,
**caractérisé en ce que**
des éléments de liaison (9) s'étendant vers le haut latéralement à l'extérieur depuis la structure porteuse du moteur d'entraînement jusqu'à la structure de cadre (12) du masque avant (3) sont prévus.

5. Camping-car selon la revendication 4,
**caractérisé en ce que**
les éléments de liaison (9) sont capables d'absorber de l'énergie par déformation en cas de choc.

6. Camping-car selon l'une quelconque des revendications précédentes,
**caractérisé en ce que**
la structure de cadre (12) comprend des éléments de cadre latéraux agissant sur le côté du pare-brise du masque avant (3) selon une colonne A (7).

7. Camping-car selon l'une quelconque des revendications précédentes,
**caractérisé en ce que**
la structure de cadre (12) présente des éléments de cadre latéraux agissant selon une colonne B.

8. Camping-car selon la revendication 5,
**caractérisé en ce que**
les cadres latéraux s'élèvent jusqu'à une extrémité supérieure du masque avant et s'appuient sur des éléments de cadre de la carrosserie agencée derrière ou sont reliés à ceux-ci.

9. Camping-car selon l'une quelconque des revendications précédentes,
**caractérisé en ce que**
la structure de cadre (12) présente un ou plusieurs éléments de cadre transversaux (10) au-dessus du pare-brise.

10. Camping-car selon l'une quelconque des revendications précédentes,
**caractérisé en ce que**
la structure de cadre (12) présente des éléments de guidage pour des stores d'occultation et/ou un lit de pavillon et/ou des canaux de câbles et/ou des passages de câbles.

11. Camping-car selon la revendication 10,
**caractérisé en ce que**
des bras articulés sont montés à rotation sur la structure de cadre (12) en tant qu'éléments de guidage pour un lit de pavillon.
